Europäisches Patentamt

European Patent Office

Office européen des brevets

(19)

(11) Publication number: **0 050 482**
**B1**

(12) EUROPEAN PATENT SPECIFICATION

(45) Date of publication of patent specification: **11.07.84**    (51) Int. Cl.³: **A 23 F 3/36**

(21) Application number: **81304811.3**

(22) Date of filing: **15.10.81**

(54) A method for the production of decaffeinated tea.

(30) Priority: **16.10.80 GB 8033356**

(43) Date of publication of application:
**28.04.82 Bulletin 82/17**

(45) Publication of the grant of the patent:
**11.07.84 Bulletin 84/28**

(84) Designated Contracting States:
**AT BE CH DE FR GB IT LI LU NL SE**

(56) References cited:
**CH - A - 275 786**
**DE - C - 608 245**
**FR - A - 368 804**
**FR - A - 707 106**
**FR - A - 791 055**
**FR - A - 2 140 098**
**FR - A - 2 361 824**
**GB - A - 1 417 649**

(73) Proprietor: **A.G. (PATENTS) LIMITED**
**Allied House 156 St.John Street**
**London, ECIP 1AR (GB)**

(72) Inventor: **Kazi, Taro**
**6 Philbeach Gardens**
**London, S.W.5. (GB)**

(74) Representative: **Holmes, Michael John et al,**
**Frank B. Dehn & Co. European Patent Attorneys**
**Imperial House 15-19 Kingsway**
**London, WC2B 6UZ, (GB)**

Courier Press, Leamington Spa, England.

## Description

The present invention relates to decaffeinated tea and a process for its production.

Both tea and coffee contain relatively large quantities of the alkaloid caffeine, which is responsible for their stimulant properties. On a weight basis, dry tea contains more caffeine than dry ground coffee, but, conversely, a conventional cup of tea only contains about 75 mg caffeine, whereas an average cup of coffee contains about 150 mg, due to the larger amount of ground coffee needed to give the required flavour level. Nevertheless, it will be seen that the amount of caffeine in tea is substantial.

While it has long been recognised that the caffeine in coffee could lead to over stimulation and, when drunk late in the evening, to unwanted wakefulness, this is not particularly recognised in the case of tea. There are many brands of decaffeinated coffee on the market, but only one or two brands of decaffeinated tea. More recently, doubts have been expressed as to the general physiological effects of caffeine, when taken habitually in relatively large quantities in drink such as coffee.

One reason why comparatively little decaffienated tea has been marketed is the difficulty of achieving acceptable flavour in decaffeinated tea. The problem is quite different in the case of coffee, in that it has been found possible to extract caffeine from coffee beans at the green stage, the characteristic flavours of coffee being developed only in the subsequent roasting. Tea, however, is prepared by a fermentation process, the tea leaves being left to ferment for a period before being dried to give the traditional "black tea." In the case of tea, extraction at the green stage has been found to inactivate certain of the enzymes necessary for fermentation. In fact, the flavour profile of tea is very unstable, particularly in the presence of water, so that it is also found that extraction of the green tea after fermentation but before drying is also unsatisfactory. We have found, therefore, that it is necessary in the case of tea for decaffeination to be carried out on the dried fermented tea, that is using "black tea". At this stage, however, all the desired flavours have already been developed, so that the extraction procedure can very readily affect seriously the final flavour of the tea.

It has been proposed to extract caffeine from tea or coffee by contacting with an organic solvent such as dichloromethane. However, when such a solvent is used for decaffeinating black tea, a substantial proportion of the flavour components are also removed resulting in a product which is very inferior compared to the starting tea. Decaffeinated tea prepared in this way has never been commercially popular due to poor flavour characterisics. British Patent Specification No. 1 516 208 described a process for the decaffeination of vegetable materials such as coffee or tea as well as aqueous extracts thereof, by extraction with a fatty material, the fatty material being an animal or vegetable fat or oil or admixture or fraction thereof which is liquid and capable of removing caffeine from a caffeine-containing composition. This is alleged to be superior to the use of solvents such as dichloromethane. In a preferred embodiment, the flavour components of the vegetable material are removed prior to extraction of caffeine and then reintroduced at a later stage. In one embodiment, this specification describes a process in which green coffee beans are first extracted with water to remove caffeine therefrom, and the caffeine in the aqueous extract is removed by further extraction with the fatty material. In order to avoid substantial loss of flavour components from the green coffee beans when extracting with water, a closed cyclic circulation of the aqueous extraction medium may be employed whereby the green beans are contacted with the aqueous medium, the aqueous medium has caffeine selectively removed therefrom by extraction with the fatty material, and the aqueous medium is recycled for further selective caffeine removal from the green beans without removing other watersoluble components such as flavour components. It should be noted that this embodiment is particularly described in relation to the treatment of green coffee beans, where the flavour profile has not been developed in contrast to black tea where the final flavour characteristics are unstable. The flavours of coffee are not developed until the roasting stage, whereas the flavours of black tea are already developed and may be very easily adversely affected. Thus, techniques which may be used for treating green coffee beans cannot readily be used for treating black tea, where it is essential that the delicate flavours are not harmed. To our knowledge, the above process has never been applied commercially to the direct extraction of black tea using fatty or oily solvents.

We have now found a method which allows the removal of caffeine from black tea without substantially affecting the flavour of the tea.

We have found that it is possible to extract caffeine from black tea without substantial deterioration of flavour, or even with some improvement of flavour, if the tea is extracted with a low boiling halogenated hydrocarbon solvent for caffeine which is substantially saturated with the flavour components of tea but which is not saturated with respect to caffiene. By using a low boiling solvent, such as dichloromethane the extracted tea may readily be freed from traces of solvent, in contrast to the use of oily or fatty solvents.

Thus, the invention provides a method for the production of black tea having a reduced caffeine content which comprises the steps of

a) treating black tea with water to increase its moisture content and thereby break down at least part of any caffeine complexes present therein;

b) extracting the treated tea with a low boiling halogenated hydrocarbon solvent for caffeine; and

c) separating the extracted tea from said solvent; characterised in that the halogenated hydrocarbon solvent is substantially saturated with flavour components of tea but is not saturated with respect to caffeine.

The extraction medium used according to the invention may be prepared by previously extracting a batch of tea with the solvent for caffeine in such a way that any flavour components of the tea which are extractable by that solvent reach saturation or near-saturation concentrations in the solvent and optionally then removing at least part of any caffeine present in the solvent, for example by adsorption. In order to avoid wastage, the tea used for the preparation of the extraction medium, which will lack some flavour components, may be mixed in minor amounts with tea treated by the method of the invention. For example, up to about 5% by weight of tea used for preparing the extraction medium may be mixed in without substantially affecting the flavour of the tea.

The flavour saturated solvent will possess useful solvent power for caffeine even when significant quantities of caffeine are present as long as the caffeine concentration is well below the saturation level. It is naturally preferable to remove substantially all of this caffeine from the initial flavour saturated solvent prior to using this to extract tea, but this can then be used to extract several successive batches of further black tea until the caffeine in the extract has built up to a level just below that which is detrimental to the solvent power of the medium for caffeine in the tea, whereupon the medium can be subjected to further caffeine removal, most simply by absorption as previously. However, for maximum caffeine extraction efficiency we have found it preferable to subject the extraction medium to caffeine removal prior to extraction of each successive batch of tea. Once caffeine has been removed, the solvent can be used to extract further tea, followed by further caffeine removal and this procedure can be repeated many times. Eventually, however, it may be necessary to re-start the procedure either with fresh solvent, or, more economically, with solvent distilled from the previously described extraction medium.

The solvent for caffiene used in the method of the invention is a low boiling halogenated hydrocarbon such as chloroform or, more preferably, dichloromethane. By the term "low boiling" we mean that the solvent is readily volatilsed, having a boiling point, for example, in the range of 35°C to 65°C.

The ratio of the solvent such as dichloromethane to the tea, on a weight basis, varies somewhat with the nature and moisture content of the black tea to be extracted, but is generally in the range of 10:1 to 60:1, and preferably about 15:1 to 40:1, e.g. about 20:1. The time and temperature of extraction are related, in that longer extraction times are required at lower temperature and vice versa, but extraction times are generally in the range of 30 minutes to 3 hours, while extraction temperatures are generally in the range 20—44°C.

We have found that the caffeine in black tea tends to be complexed, for example with polyphenols such as theaflavin, and in that form is resistant to extraction with solvents such as methylene chloride. However, such complexes are readily cleaved at room temperature by increasing the moisture content of the black tea to above its usual level (generally about 7.5%) prior to extraction. In the preliminary treatment the moisture content of the tea is conveniently increased up to 10 to 35%, and preferably about 25%, by weight of water. This treatment step may conveniently be effected by agitating the tea at ambient temperature (e.g. in the range 10—30°C) with the required amount of additional water for a suitable time, for example 15 to 45 minutes, e.g. 30 minutes, immediately prior to extraction.

The removal of the caffeine from the extraction solvent is preferably effected by adsoption, either batchwise or continuously. A number of suitable adsorbents are known from the literature. In that caffeine is a base, cation-exchange resins can be used, as well as minerals such as Fullers earth having ionexchange properties of a similar type. Preferred adsorbents are cation-exchange resins of the macro-reticular type, especially Amberlyst 15.

The ratio of absorbent to extract necessary to remove the caffeine can readily be determined by experiment but when Amberlyst 15 is used, the ratio of absorbent to extract, on a weight basis, is generally in the range 1:30 to 1:60.

In general, the most suitable time and temperature for the adsorption step may be determined by experiment, but 30—60 minutes at room temperature are suitable when Amberlyst 15 is used.

The removal of caffeine from the extraction medium may be carried out after each extraction of fresh black tea or, as indicated above, it may be possible to extract a succession of batches of tea and to permit the caffeine concentration to build up over a number of extraction stages before the removal. In general, the caffeine concentration in the extraction medium may be permitted to reach about 20% of saturation before such removal.

After separation of the extracted tea from the extraction medium, for example by simple filtration, the extracted tea may be subsequently treated to remove residual solvent and moisture. As the solvent is low boiling, it may be adequate simply to subject the tea to tumble-drying in a stream of air, preferably hot air, or it may, in some cases, be preferable to remove the solvent under vacuum, for example by flash evaporation.

Where it is desired to recover the caffeine removed from the tea, ths absorbent may be treated to liberate the caffeine, normally by displacement by alkali. Such techniques are well described in the literature.

We have found that the method according to the invention allows the caffeine content of black tea to be substantially reduced without adversely affecting the flavour. For example, we have been able to reduce the caffeine content of black tea by more than 75%, e.g. to less than 0.7% by weight of caffeine. Tea having such a low caffeine content would, on infusion, give typical levels of caffeine in a standard cup of less than 14 mg, and this compares very favourably with commercial decaffeinated coffees which give typical caffeine levels of 20 mg per cup.

The tea produced by the extraction procedure according to the invention has markedly superior flavour properties as compared with tea which has been extracted with pure solvent. Indeed, in tastings which have been carried out, the tea prepared according to the invention has been judged to be marginally superior to the tea from which it was prepared.

The following examples are given by way of illustration only; all temperatures are in degrees C:—

### Example 1

20g Tea with an integral moisture content of 7.5% were placed in a flask and 500 ml of dichloromethane were added. A reflux condenser was connected to the flask and the contents stirred for 1 hour at 25°. The contents of the flask were then filtered. The extracted tea was tumble dried and set aside.

The dichloromethane tea extract was used for a subsequent extraction as follows:

A further 10 g of tea were placed in a flask, the moisture content of the tea was adjusted to 25% by the addition of 2.58 ml distilled water, and the flask connected to a reflux condenser. The contents of the flask were agitated for 30 minutes at 25° in this conditioning stage. 400 ml of the extract from the first extraction were added to the flask and agitation was continued for 1 hour. At the end of the extraction the contents of the flask were filtered and the recovered tea was tumble dried in a stream of air at 45° until a moisture content of 7.5% was reached.

The dichloromethane extract was decaffeinated by stirring at room temperature with 10 g Amberlyst 15 macro-reticular ion exchange resin in the sodium form for 30 minutes, followed by filtration. The decaffeinated extract was subsequently used to extract 25 further batches of tea with its volume being adjusted as necessary to 400 ml with fresh dichloromethane. It was necessary to decaffeinate the extract after extraction of every 8th batch of tea.

It was possible by this method to reduce the caffeine content of the black tea from 3.9% to 0.38%. Organoleptic assessment of infusions prepared from this decaffeinated product indicated a loss of bitterness and astringency in comparison to those prepared from the untreated tea.

It was possible to re-cycle the tea set aside at the end of the first extraction into subsequent batches of tea prior to the decaffeination step without significantly affecting the quality of the end product.

### Example 2

The procedure was similar to that in Example 1 except that the tea was extracted for 30 minutes with 2 x 200 ml of the first extract.

The caffeine content of black tea was reduced from 4.0% to 0.38%.

### Example 3

500 g Tea are placed in a rotatable container of 26 litres capacity and 11 litres of dichloromethane are added. The container is rotated at 26 r.p.m. for 1 hour, whereupon the solvent extract is discharged to a storage vessel and the tea put on one side. A further 500 g of tea are placed in the container and sufficient water added to increase the moisture content of the tea to 25%. The container is closed and allowed to stand for 30 minutes. 10 Litres of solvent extract are then introduced into the container, and this is then rotated at 26 r.p.m. for 3 hours. The tea and extract are then removed and the tea dried at 60 to 65°C for 2 hours. If necessary the moisture content of the tea may be adjusted to 7%. The caffeine content of the tea is typically 0.69% by weight. The solvent, after separation from the tea, is decaffeinated as described in Example 1 and used to extract a further batch of black tea. The overall procedure is repeated with successive batches of tea.

## Claims

1. A method for the production of black tea having a reduced caffeine content which comprises the steps of

a) treating black tea with water to increase its moisture content and thereby break down at least part of any caffeine complexes present therein:

b) extracting the treated tea with a low boiling halogenated hydrocarbon solvent for caffiene; and

c) separating the extracted tea from said solvent; characterised in that the halogenated hydrocarbon solvent is substantially saturated with flavour components of tea but is not saturated with respect to caffeine.

2. A method according to claim 1 wherein the solvent is dichloromethane.

3. A method according to either of claims 1 and 2 wherein the weight ratio of tea to solvent is from 1:10 to 1:60.

4. A method according to claim 3 wherein the weight ratio is about 1:20.

5. A method according to any one of the preceding claims wherein the halogenated hydrocarbon solvent which is substantially saturated with flavour components of tea but which is not saturated with respect to caffeine is first prepared by extracting a batch of black tea with the solvent in such a way that any flavour components of the tea which are extractable by the solvent reach substantially saturation concentrations in the solvent and, if necessary or desired, at least a part of any caffeine then present in the solvent is subsequently removed therefrom.

6. A method according to any one of the preceding claims wherein the halogenated hydrocarbon solvent saturated with flavour components is used to extract successive batches of treated tea, optionally after removal of at least a part of any caffeine present in the solvent.

7. A method according to claim 6 wherein caffeine is removed from the solvent prior to extraction of each successive batch of treated tea.

8. A method according to any one of claims 5 to 7 wherein caffeine removal is effected by adsorption onto a cation-exchange resin.

9. A method according to any one of the preceding claims wherein in step a) the moisture content of the tea is increased to 10 to 35% by weight.

**Revendications**

1. Procédé de production de thé noir ayant une teneur réduite en caféine qui consiste à:

a) traiter du thé noir avec de l'eau pour augmenter sa teneur en humidité et décomposer ainsi au moins une partie des complexes de caféine présents;

b) extraire le thé traité avec un hydrocarbure halogéné à bas point d'ébullition qui est un solvant de la caféine; et

c) séparer le thé extrait dudit solvant; caractérisé en ce que l'hydrocarbure halogéné servant de solvant est pratiquement saturé avec des constituants armomatiques du thé, mais n'est pas saturé par rapport à la caféine.

2. Procédé selon la revendication 1 dans lequel le solvant est le dichlorométhane.

3. Procédé selon la revendication 1 ou la revendication 2 dans lequel le rapport pondéral due thé au solvant est de 1:10 à 1:60.

4. Procédé selon la revendication 3 dans lequel le rapport pondéral est d'environ 1:20.

5. Procédé selon l'une quelconque des revendications précédentes, dans lequel l'hydrocarbure halogéné servant de solvant qui est pratiquement saturé avec des constituants aromatiques du thé, mais n'est pas saturé par rapport à la caféine, est tout d'abord préparé par extraction d'une lot de thé noir avec le solvant d'une façon telle que tous les constituants aromatiques du thé qui peuvent être extraits par le solvant parviennent pratiquement aux concentrations de saturation dans le solvant et, si nécessaire ou désiré, au moins une partie de la caféine présente dans le solvant ensuite éliminée de ce solvant.

6. Procédé selon l'une quelconque des revendications précéntes, dans lequel l'hydrocarbure halogéné servant de solvant, qui est saturé avec des constitutants aromatiques, est utilisé pour extraire des lots successifs de thé traité, éventuellement après élimination d'au moins une partie de toute caféine présente dans le solvant.

7. Procédé selon la revendication 6, dans lequel la caféine est éliminée du solvant avant l'extraction de chaque lot successif de thé tratité.

8. Procédé selon l'une quelconque des revendications 5 à 7, dans lequel l'élimination. de la caféine est effectuée par adsorption sur une résine échangeuse de cations.

9. Procédé selon l'une quelconque des revendications précédentes dans lequel dans le stade (a) la teneur en humidité du thé est portée à 10 à 35% en poids.

**Patentansprüche**

1. Verfahren zur Herstellung von schwarzem Tee mit veringertem Koffeingehalt, umfassend die Stufen

a) Behandeln von schwarzem Tee mit Wasser zur Erhöhung seines Feuchtigkeitsgehalts und hierdurch Abbau von mindestens Teil jeglicher darin vorliegender Koffeinkomplexe,

b) Extrahieren des behandelten Tees mit einem niedrigsiedenden halogenierten Kohlenwasserstofflösungsmittel für Koffein, und

c) Trennen des extrahierten Tees vom Lösungsmittel, dadurch gekennzeichnet, daß das halogenierte Kohlenwasserstofflösungsmittel im wesentlichen mit den Geschmackskomponenten des Tees gesättigt, nicht jedoch im Hinblick auf Kofffein gesättigt ist.

2. Verfahren nach Anspruch 1, dadurch gekenn-zeichnet, daß man als Lösungsmittel Dichlormethan verwendet.

3. Verfahren nach einem der Ansprüche 1 und 2, dadurch gekennzeichnet, daß das Gewichtsverhältnis von Tee zu Lösungsmittel zwischen 1:10 und 1:60 liegt.

4. Verfahren nach Anspruch 3, dadurch gekennzeichnet, daß das Gewichtsverhältnis ungefähr 1:20 beträgt.

5. Verfahren nach einem der vorhergehenden Ansprüche, dadurch gekennzeichnet, daß man das halogenierte Kohlenwasserstofflösungsmittel, welches mit den Geschmackskomponenten des Tees im wesentlichen gesättigt, nicht jedoch im Hinblick auf Koffein gesättigt ist, zuerst dadurch herstellt, daß man eine Charge schwarzen Tee mit dem Lösungsmittel derart extrahiert, daß die Geschmackskomponenten des Tees, welche durch das Lösungsmittel extrahierbar sind, im wesentlichen Sättigungskonzentrationen im Lösungsmittel erreichen und, erforderlichenfalls oder gewünschtenfalls mindestens einen Teil des zu diesem Zeitpunkt im Lösungsmittel vorliegenden Koffeins anschließend daraus entfernt.

6. Verfahren nach einem der vorhergenden Ansprüche, dadurch gekennzeichnet, daß das mit Geschmackskomponenten gesättigte halogenierte Kohlenwasserstofflösungsmittel zur Extrahierung aufeinanderflogender Chargen vonbehandeltem Tee verwendet wird, gewünschtenfalls nachdem man mindestens einen Teil von gegebenenfalls im Lösungsmittel vorliegendem Koffein entfernt hat.

7. Verfahren nach Anspruch 6, dadurch gekennzeichnet, daß man das Koffein aus dem Lösungsmittel vor der Extraktion jeder jeweils aufeinanderfolgenden Chargen von behandeltem Tee enternt.

8. Verfahren nach einem der Ansprüche 5 bis 7, dadurch gekennzeichnet, daß man das Koffein durch Adsorption auf einem Kationenaustauscher-Harz entfernt.

9. Verfahren nach einemder vorhergehenden Ansprüche, dadurch gekennzeichnet, daß man in Stufe a) den Feuchtigkeitsgehalt des Tees auf 10—35 Gewichtsprozent erhöht.